Europäisches Patentamt

European Patent Office

Office européen des brevets

(19)

(11)     EP 1 098 464 B1

(12)                    **FASCICULE DE BREVET EUROPEEN**

(45) Date de publication et mention
     de la délivrance du brevet:
     **28.05.2003 Bulletin 2003/22**

(51) Int Cl.$^7$: **H04J 13/00**, H04B 1/707

(21) Numéro de dépôt: **00403017.7**

(22) Date de dépôt: **30.10.2000**

(54) **Procédé de détection conjointe**

Verfahren zur gleichzeitigen Erfassung

Method for joint detection

(84) Etats contractants désignés:
     **AT BE CH CY DE DK ES FI FR GB GR IE IT LI LU
     MC NL PT SE**

(30) Priorité: **08.11.1999 FR 9914033**

(43) Date de publication de la demande:
     **09.05.2001 Bulletin 2001/19**

(73) Titulaire: **Mitsubishi Electric Information
     Technology Centre Europe B.V.
     1119 NS Schiphol Rijk (NL)**

(72) Inventeur: **Jechoux, Bruno,
     Immeuble Germanium
     35700 Rennes (FR)**

(74) Mandataire: **Maillet, Alain
     SCP Le Guen & Maillet,
     5, Place Newquay,
     B.P. 70250
     35802 Dinard Cedex (FR)**

(56) Documents cités:
     **EP-A- 0 971 485**

     • **KARIMI H R ET AL: "A novel and efficient
       solution to block-based joint-detection using
       approximate Cholesky factorization" IEEE
       INTERNATIONAL SYMPOSIUM ON PERSONAL,
       INDOOR AND MOBILE RADIO
       COMMUNICATIONS,XX,XX, vol. 3, 1998, pages
       1340-1345-1345vol3, XP002112134**
     • **KARIMI H R: "Efficient multi-rate multi-user
       detection for the asynchronous WCDMA uplink"
       GATEWAY TO 21ST CENTURY
       COMMUNICATIONS VILLAGE. VTC 1999-FALL.
       IEEE VTS 50TH VEHICULAR TECHNOLOGY
       CONFERENCE (CAT. NO.99CH36324),
       GATEWAY TO 21ST CENTURY
       COMMUNICATIONS VILLAGE. VTC 1999-FALL.
       IEEE VTS 50TH VEHICULAR TECHNOLOGY
       CONFERENCE, AMSTERDAM,, pages 593-597
       vol.1, XP002142538 1999, Piscataway, NJ, USA,
       IEEE, USA ISBN: 0-7803-5435-4**

**Description**

La présente invention concerne un procédé de détection conjointe destiné à être mis en oeuvre dans un récepteur d'un système de transmission, tel qu'un système de transmission du type à répartition de codes CDMA (Code Division Multiple Access : accès multiple à répartition de codes).

De nombreux systèmes de télécommunication en cours de développement mettent en oeuvre les techniques CDMA. Ces techniques utilisent le partage en code des ressources fréquentielles, c'est-à-dire que plusieurs utilisateurs utilisent la même bande de fréquence en même temps et sont différenciés par les codes d'étalement différents qu'ils utilisent. Un utilisateur distingue en général le signal qui lui est adressé dans le signal total reçu en comparant celui ci avec son code d'étalement.

Cependant la qualité du signal reçu est diminuée par l'interférence résiduelle venant des autres utilisateurs appelée MAI (Multiple Access Interference = Interférence d'accès multiple). Divers techniques dont la détection conjointe, plus particulièrement utilisée dans le cas de codes d'étalement synchrones, visent à utiliser la connaissance des codes d'étalement des autres utilisateurs afin de réduire cette interférence résiduelle des autres utilisateurs.

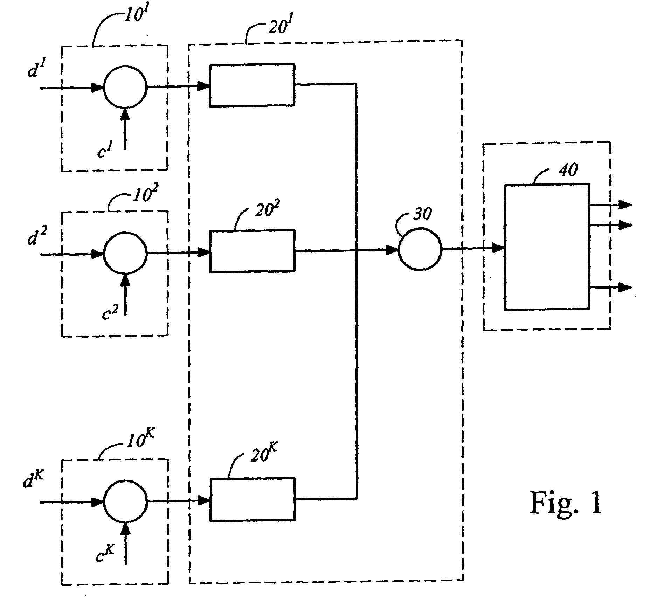

On a représenté à la Fig. 1 un modèle de la liaison montante d'un système de transmission du type CDMA qui utilise un procédé de détection conjointe. Ce système est prévu pour recevoir $K$ utilisateurs pourvus chacun d'un émetteur $10_k$ ($k = 1$ à $K$). Chaque émetteur $10_k$ est prévu pour transmettre les données $d^k$ d'un utilisateur $k$ par salves de $N$ symboles de données, ces données étant alors notées $d^k = \{x_k^1,...,x_k^N\}$ où $x_k^n$ représente alors le $n^{ième}$ symbole émis par l'utilisateur $k$. Dans chaque émetteur $10_k$, les données $d^k$ d'un utilisateur $k$ sont soumises à un code d'étalement $c^k$ de longueur $Q$ bits alloué à l'utilisateur $k$ considéré avant d'être émises sur un canal $20_k$. Chaque canal $20_k$ est caractérisé par une réponse impulsionnelle variant dans le temps notée $h^k$ et une largeur de bande fréquentielle notée $B_c = 1/T_c$. Les données sont alors transmises sur un canal $20_k$. Pour l'estimation de la réponse impulsionnelle $h^k$ de chaque canal $20_k$, sont pris en compte $L$ échantillons espacés les uns des autres d'un temps qui est égal à $T_c$.

Klein and all ont pu montrer que le signal $y$ reçu par le récepteur peut être représenté par un vecteur $y$ de dimension ($N \times Q + L - 1$) dont les composantes sont représentatives des signaux émis par chacun des $K$ utilisateurs, éventuellement additionné à un bruit gaussien représenté par un vecteur $n$ également de dimension ($N \times Q + L - 1$). On peut donc écrire :

$$y = A.x + n$$

où,

$$x = \left[ x_1^1, x_1^2, ..., x_1^K, \cdots, x_N^1, x_N^2 ..., x_N^K \right]$$

est le signal émis avant étalement,

$$y = \left[ y_1, \cdots, y_{N.Q}, ..., y_{N.Q+L-1} \right]$$

est le signal reçu par le récepteur,

$$n = \left[ n_1, \cdots, n_{N.Q}, ..., n_{N.Q+L-1} \right]$$

est le bruit blanc gaussien additif, et
$A$ est une matrice de dimensions ($N.Q + L-1$) x ($K.N$)

Chaque élément de la matrice $A$, noté $A_{i,j}$, est déterminé en fonction de l'estimation de la réponse impulsionnelle de chacun des canaux d'ordre $k$

$$h^k = \left[ h_1^k, h_2^k, ..., h_L^k \right] \text{avec } k = 1, ..., K$$

et en fonction de chacun des codes d'étalement d'ordre $k$ :

$$c^{k} = \left| c_{1}^{k}, c_{2}^{k}, ..., c_{Q}^{k} \right| \text{avec } k = 1, ..., K$$

Si l'on pose

$$i = Q.(n-1)+w$$

et

$$j = k+K(n-1)$$

Un système de transmission du type CDMA peut être modélisé d'une manière où chaque élément $A_{ij}$ peut s'écrire sous la forme

$$A_{i,j} = b_{w}^{k} \text{ pour } k = 1..K, n=1...N \text{ et } w=1...Q+L\text{-}1$$

$$A_{i,j} = 0$$

sinon
avec

$$b^{k} = c^{k} * h^{k} = \left| b_{1}^{k}, b_{2}^{k}, ..., b_{Q+L-1}^{k} \right| \text{pour } k = 1..K$$

Afin d'estimer les données transmises par chaque utilisateur $k$, on peut procéder, dans un récepteur 30, à une détection conjointe telle que celle qui est décrite par A.Klein, G.K.Kaleh et P.W.Baier dans un article intitulé "Equalisers for multi-user detection in code division multiple access mobile radio systems" paru dans IEEE de 1994.

Ces procédés de détection conjointe connus consistent essentiellement à résoudre l'équation matricielle donnée ci-dessus en déterminant le vecteur des symboles $x$ en connaissant le vecteur des signaux détectés $y$, la matrice système $A$ et la matrice de bruit $n$.

On notera que la connaissance des matrices $y$, $A$ et $n$ est faite par ailleurs par des méthodes d'estimation qui sont connues de l'homme du métier et qui ne sont par conséquent pas décrites plus en détail dans la présente description.

On notera encore que, notamment du fait que la réponse impulsionnelle de chacun des canaux $20_{k}$ varie avec le temps, c'est à chaque instant que les éléments de la matrice $A$ change de valeurs.

La détermination du vecteur des symboles $x$, par la méthode exposée ci-dessus, utilise généralement un des deux critères suivants qui sont, d'une part, le forçage à zéro (zero forcing ou ZF) et, d'autre part, l'erreur quadratique moyenne minimum (MMSE = Minimum Mean Square Error). Ces deux critères mènent respectivement aux solutions suivantes :

$$\hat{x} = (A^{+}A)^{-1} A^{+} y$$

pour le critère de forçage à zéro
et

$$\hat{x} = (A^{+}A+\sigma^{2}I)^{-1}A^{+}y$$

pour le critère d'erreur quadratique moyenne minimum MMSE ($I$ est la matrice unité, $\sigma^{2}$ étant la variance des éléments de la matrice de bruit $n$).

Dans la suite de la description, l'exposant + appliqué à une matrice signifie qu'il s'agit de son transposé conjugué.

Ces équations peuvent également s'écrire :

$$\hat{x} = M^{-1}A^{+}y$$

Comme on peut le constater, la résolution de cette équation nécessite donc l'inversion d'une matrice, notée $M$, qui est soit égale au produit $A^{+}.A$ de la matrice système transposé conjugué $A^{+}$ par la matrice système $A$, soit égale au produit $A^{+}.A+\sigma^{2} I$ de la matrice système transposé conjugué $A^{+}$ par la matrice système $A$ auquel est ajoutée la matrice unité $I$ multipliée par la variance $\sigma^{2}$ du bruit.

Lorsqu'elle est hermitienne, définie et positive, (ce qui est toujours le cas avec la modélisation d'un système CDMA donnée ci-dessus) une matrice $M$ peut être décomposée, au moyen d'un algorithme, dit algorithme de Cholesky, en une matrice triangulaire supérieure $U$ (ou inférieure $L$ selon la notation choisie) telle que la matrice $M$ est égale au produit de la matrice triangulaire supérieure transposée conjuguée $U^{+}$ par la matrice $U$ :

$$M=U^{+}.U$$

ou selon le cas, au produit de la matrice triangulaire inférieure $L$ par la matrice transposée conjuguée $L^{+}$ :

$$M=L.L^{+}$$

Or, l'inversion de la matrice $M$ est grandement simplifiée puisque la matrice inverse $M^{-1}$ est soit égale au produit de la matrice inverse $U^{-1}$ par le transposé conjugué de cette matrice $(U^{-1})^{+}$ :

$$M^{-1} = U^{-1} (U^{-1})^{+}$$

soit au produit de la matrice inverse conjuguée $(L^{-1})^{+}$ par la matrice $L^{-1}$ :

$$M^{-1} = (L^{-1})^{+} L^{-1}$$

Du fait du peu d'opérations nécessaires à l'inversion de $U$, l'inversion de $M$ en passant par la décomposition de Cholesky nécessite beaucoup moins d'opérations que l'inversion de $M$ par un calcul direct.

Cette méthode par décomposition de Cholesky autorise une réduction de la complexité de ce calcul par un facteur 2 environ (complexité en $T^{3}/6$, T étant la dimension de la matrice) par rapport aux techniques d'inversion directe classiques. Cependant la quantité de calcul reste encore très importante.

Le but de la présente invention est de proposer un procédé de détection conjointe qui utilise la méthode par décomposition de Cholesky pour estimer au mieux la matrice L sans grever inutilement les ressources de calcul du récepteur.

Dans un article intitulé "A novel and efficient solution to block-based joint-détection using approximate cholesky factorization" (XP002112134, paru dans IEEE de 1998) décrient H.R. Karimi et N.W.Anderson dans le cadre d'une détection conjointe en TD-CDMA, une méthode de factorisation de la matrice (hermitienne) de corrélation X selon une technique rapprocher une décomposition de Cholesky: $X=L.L^{H}$. Il est tiré avantage de la convergence des sous-matrices selon les différentes diagonales de la matrice L. Plus précisément, le document préconise un calcul des sous-matrices jusqu'à un rang donné $i_{m}$ et une duplication des sous-matrices au-delà. On obtient ainsi une matrice L ayant une structure quasi-Toeplitz par blocs (les blocs d'une diagonale sont indiques à partir d'un certain rang). Le document précise en outre que des tests pratiqués dans de nombreuses conditions de multi-trajet montent qu'une duplication des sous-matrices à partir d'un rang $i_{m}=2$ permet en général d'obtenir une approximation suffisamment précise de la matrice L. Il ne s'agit cependant là que d'une observation statistique.

A cet effet, un procédé de détection conjointe selon la présente invention est du type qui consiste en une étape de calcul des signaux qui ont été émis par lesdits émetteurs dudit système mis sous la forme d'un vecteur $x$ et ce, à partir de l'ensemble des signaux reçus des émetteurs dudit système mis sous la forme d'un vecteur $y$, de l'ensemble des caractéristiques dudit système mis sous forme d'une matrice $A$ et éventuellement de l'ensemble des caractéristiques de bruit mis sous forme d'une matrice $n$, ladite étape de calcul consistant en une étape d'inversion d'une matrice $M$ fonction de la matrice système $A$, une étape d'application de l'ensemble des signaux reçus $y$ sur une matrice résultant du produit de la matrice inverse $M^{-1}$ par le transposé conjugué de la matrice $A$, ladite étape d'inversion de la matrice $M$ consistant en sa décomposition de Cholesky en une matrice triangulaire $U$ ou $L$.

Ce procédé est caractérisé en ce qu'il consiste à déterminer ladite matrice triangulaire de manière itérative, chaque itération consistant d'abord au calcul d'un ensemble de blocs appartenant à une ligne de blocs de ladite matrice puis, en fonction de la valeur prise par un critère prédéterminé caractérisant l'évolution du processus de calcul de ladite matrice décomposée comparée à une valeur seuil, soit au passage à .l'itération suivante soit à la duplication de la ligne courante sur toutes les autres lignes restantes avec décalage à droite d'un bloc et, éventuellement, tronquage des blocs en excédant, ladite valeur seuil étant déterminée dynamiquement en fonction des ressources disponibles au moment du calcul.

Selon une autre caractéristique de l'invention, ledit critère est tel que sa valeur dépend des valeurs respectivement prises par au moins un élément de l'ensemble de blocs de la ligne courante et le ou les éléments correspondants de l'ensemble de blocs de la ligne calculée à l'itération précédente.

Selon une autre caractéristique de l'invention, ledit critère est tel que sa valeur est égale à la valeur absolue de la différence des valeurs prises respectivement par l'élément de l'ensemble de blocs de la ligne courante dont la valeur absolue est la plus grande et par l'élément correspondant de l'ensemble de blocs de la ligne précédente.

Selon une autre caractéristique de l'invention, ledit critère est tel que sa valeur est égale à la valeur maximale des valeurs absolues des différences entre les valeurs prises respectivement par tous les éléments de l'ensemble de blocs de la ligne courante et par les éléments correspondants de l'ensemble de blocs de la ligne précédente.

Selon une autre caractéristique de l'invention, ledit critère a pour valeur le nombre d'itérations, là valeur seuil correspondant alors à un nombre maximal d'itérations.

La présente invention concerne également un récepteur qui est prévu pour mettre en oeuvre un procédé de détection tel qu'il vient d'être décrit.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels .

La Fig. 1 est un schéma synoptique d'un système CDMA qui est prévu pour mettre en oeuvre un procédé de détection conjointe selon la présente invention,

La Fig. 2 est un schéma d'une matrice résultant d'une décomposition de Cholesky mettant en oeuvre le procédé de la présente invention,

La Fig. 3 est un diagramme montrant les différentes étapes mises en oeuvre par un procédé selon une premier mode de réalisation de la présente invention, et

La Fig. 4 est un diagramme montrant les différentes étapes mises en oeuvre par un procédé selon une second mode de réalisation de la présente invention.

La présente invention est basée sur le fait que la matrice $M$ (on rappelle que $M = A^+A$ dans le cas ZF ou $M = A^+A + \sigma^2I$ dans le cas MMSE) représentative du comportement d'un système de transmission CDMA est de type Toeplitz par blocs de dimensions $[K \times K]$.

En effet, si l'on regroupe les éléments de la matrice $M$ en blocs de dimensions $K \times K$, les blocs qui appartiennent à une même ligne parallèle à la diagonale allant du premier bloc ou dernier bloc de la matrice $M$ sont égaux entre eux. Il en est de même des blocs qui appartiennent à ladite diagonale.

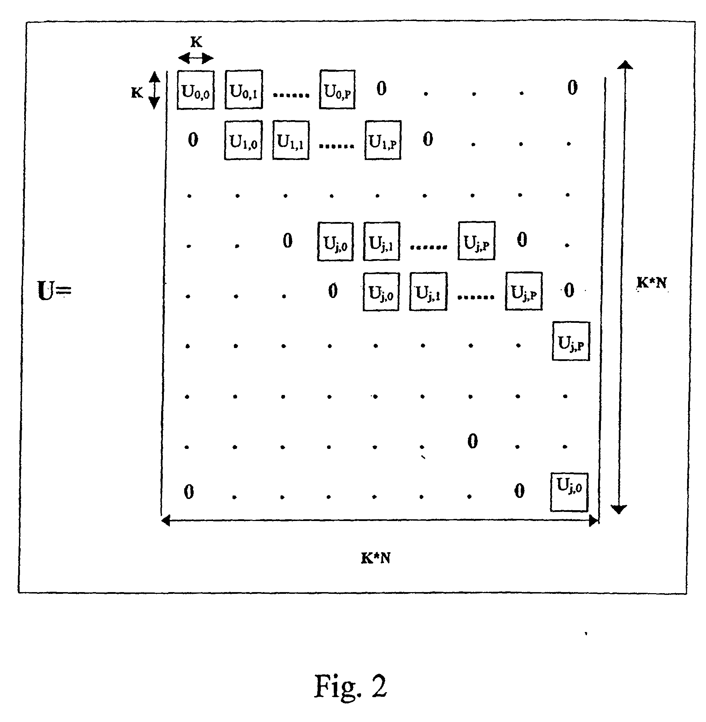

On va considérer, en relation avec la Fig. 2, une matrice $U$ résultant de la décomposition de Cholesky d'une matrice $M$ ($U = C(M) = $ soit $C(A^+A)$, soit $C(A^+A + \sigma^2I)$).

Comme on peut le constater sur la Fig. 2, la matrice $U$ est une matrice triangulaire supérieure. Ainsi, chaque partie d'une ligne de blocs située à gauche de la diagonale est constituée de blocs égaux à des matrices carrés nulles de dimensions $[K,K]$. Quant à chaque partie d'une ligne de blocs d'indice i située à la droite de la diagonale, diagonale incluse, elle est constituée d'au moins un bloc $U_{t,p}$ de dimensions $[K,K]$ ($p$ étant l'indice des colonnes de blocs) et au plus de $P + 1$ blocs adjacents i de dimension $[K,K]$ formant un ensemble de blocs, noté par la suite $E_t$. Les blocs qui sont situés au-delà du $(P+1)^{ième}$, s'ils existent, sont des matrices nulles. On peut donc constater à la Fig. 2 que :

$$E_t = [U_{t,0}\, U_{t,1}\, \dots\, U_{t,P}]$$

lorsque i $\leq N-P+1$

$$E_i = [U_{i,0} \ldots U_{i,N-1}]$$

lorsque $i > N-P+1$ et

$$E_N = U_{N,0}$$

On rappelle que $P$ étant la partie entière de $(1+(L-1)/Q)$.

On peut noter également que l'élément de la première ligne d'un ensemble de blocs $E_t$ peut également être considéré comme étant le $i.K^{ème}$ élément de la $i.K^{ème}$ ligne de la matrice $U$.

On notera qu'on utilise ici une notation où l'indice de colonne de blocs p des blocs $U_{t,p}$ est nul pour la diagonale de la matrice $U$. Il s'ensuit que, dans la suite de la présente description, on dira qu'un élément $a_{n,m}$ ($n^{ième}$ ligne, $m^{ième}$ colonne) d'un bloc $U_{t,p}$ d'un ensemble $E$ correspond à un élément $a_{n,m}$ (même indices de ligne et de colonne) d'un bloc $U_{t-1,p}$ d'un ensemble $E_{t-1}$.

Tous les blocs sont différents les uns des autres. Cependant, J Rissanen a montré dans un article paru dans Mathematics of Computation, vol 27, n° 121 de janvier 1973, pages 147-157 qu'une matrice dont la dimension tend vers l'infini, qui est hermitienne, définie positive et de type Toeplitz en bloc et qui comprend un nombre fini de blocs non nul a pour matrice résultant de la décomposition de Cholesky une matrice $U$ dont les ensembles $E$ de blocs présentent des propriétés particulières.

En utilisant la notation de la Fig. 2, une de ces propriétés est que plus l'indice de lignes de blocs $i$ est grand moins les blocs $U_{t,p}$ ($p$ compris entre $0$ et $P$) sont différents des blocs $U_{t-1,p}$, et ce, jusqu'à tendre asymptotiquement vers l'égalité quand l'indice $N$ tend vers l'infini.

La présente invention est essentiellement basée sur cette propriété. La présente invention est également applicable du fait que la matrice à traiter dans le cas d'un réseau de télécommunication tel que celui qui est représenté à la Fig. 1 est très grande (par exemple dans le cas de l'UMTS-TDD où $N$ vaut entre 61 et 976 et $K$ entre 1 et 16).

La présente invention propose ainsi de calculer la matrice $U$ de manière itérative. A chaque itération, un ensemble de blocs $E_t$ est calculé en appliquant la méthode de Cholesky et est ensuite écrite dans la matrice $U$ à sa place normale.

Puis, sur la base de la valeur prise par un critère prédéterminé caractérisant l'évolution du processus de calcul de matrice $U$, il est décidé soit du lancement de l'itération suivante, soit d'une duplication avec décalage à droite d'un bloc de la ligne d'indice $i$ sur les autres lignes d'indice $j$ avec $j = i+1$ à N. *Plus précisément, on* considère une valeur prise par ce critère et, si elle est inférieure à une valeur seuil, la duplication avec décalage à droite d'un bloc est mise en oeuvre, sinon c'est l'itération suivante qui est mise en oeuvre.

Comme on le comprendra, lors de la duplication et du décalage à droite d'un bloc, il peut être nécessaire de tronquer l'ensemble à dupliquer lorsque le nombre de blocs à écrire est inférieur au nombre de blocs de la ligne de blocs précédente. On notera que la valeur seuil pourrait varier dynamiquement en fonction des ressources disponibles au moment du traitement.

Selon un premier mode de réalisation, pour caractériser l'évolution du processus de calcul de la matrice $U$, la valeur de ce critère dépend des valeurs prises par au moins un élément $a_{n,m}$ de l'ensemble $E_t$ de la ligne de blocs courante et le ou les éléments $a_{n,m}$ correspondants de l'ensemble $E_{t-1}$ de la ligne de blocs précédente.

Par exemple, ce critère a pour valeur la valeur absolue de la différence des valeurs prises respectivement par, d'une part, l'élément $a_{n,m}$ de l'ensemble $E_t$ de la ligne de blocs courante choisi pour avoir la plus grande valeur absolue parmi tous ses éléments et par, d'autre part, l'élément $a_{n,m}$ correspondant de l'ensemble $E_{t-1}$ de la ligne de blocs précédente.

Il peut également prendre pour valeur la valeur maximale des valeurs absolues des différences entre les valeurs prises respectivement par les éléments $a_{n,m}$ de l'ensemble $E_t$ de la ligne courante et par les éléments correspondants de l'ensemble $E_{t-1}$ de la ligne précédente.

Dans ces deux cas, la valeur seuil correspond alors à un niveau d'erreurs acceptable. Le choix de sa valeur permet d'obtenir une détection conjointe qui est certes dégradée (à un niveau correspondant à cette valeur) mais qui présente une complexité de calcul inférieure.

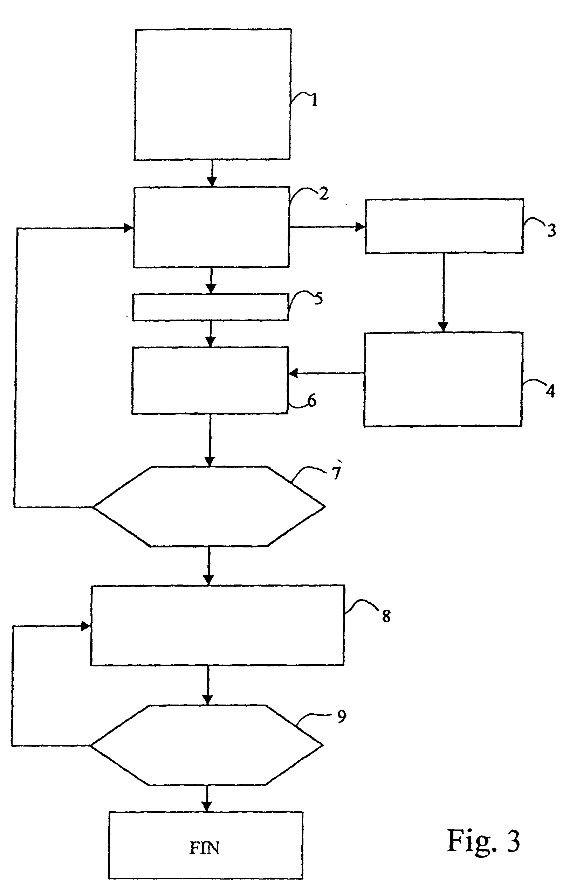

On a représenté à la Fig. 3, un diagramme montrant le déroulement du procédé de la présente invention selon ce premier mode de réalisation.

L'étape 1 est une étape d'initialisation pendant laquelle les différentes variables du processus sont déterminées. Il en est ainsi notamment de la valeurs seuil $S_{min}$ et d'une variable $i$ désignant le numéro d'ordre de l'itération considérée qui est initialisé ici à 1.

C'est à l'étape 2 que sont calculées les valeurs de tous les éléments de l'ensemble de blocs $E_t$. La ligne correspondante est mémorisée dans la matrice $U$ à l'endroit considéré à une étape 3.

A l'étape 4, sont sortis les éléments de l'ensemble de blocs $E_{t-1}$ qui vont servir à la détermination de la suite à donner au processus d'itération.

A l'étape 5, le numéro d'ordre de l'itération i est incrémenté.

A l'étape 6, la valeur du critère S est calculée conformément à ce qui est décrit ci-dessus.

A l'étape 7, cette valeur $S$ est comparée à la valeur seuil $S_{min}$ considérée déterminée à l'étape 1 (ou éventuellement recalculée depuis en fonction des conditions de ressources disponibles) et la décision quant à la suite du processus du calcul de la matrice $U$ est prise. Soit l'étape 2, est de nouveau mise en oeuvre pour le calcul de la ligne suivante, soit l'étape 8 de duplication et décalage à droite est mise en oeuvre. Pour ce faire, une boucle est prévue qui est interrompue lorsqu'à l'étape 9, il a été constaté que la dernière ligne de la matrice $U$ a été calculée.

Le résultat du procédé de la présente invention est visible à la Fig. 2 où, à partir de la $j^{ième}$ ligne, les lignes sont égales à cette ligne dupliquée puis décalée à chaque fois à droite d'un bloc, puis éventuellement tronquée lorsque la demi-ligne considérée comporte moins de P blocs.

Selon un second mode de réalisation, ce critère a pour valeur le nombre d'itérations réalisées. La valeur seuil correspond alors au nombre maximal d'itérations acceptables sans que soit dépassée la capacité de calcul maximale allouée au processus de détection conjointe.

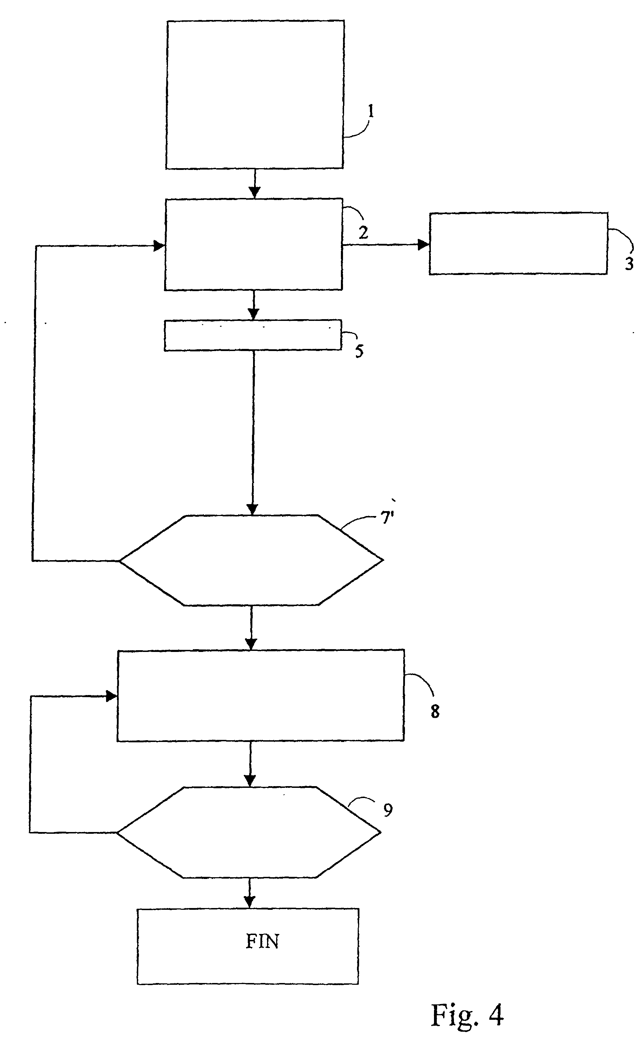

On a représenté à la Fig. 4, le diagramme correspondant à ce mode de réalisation où les mêmes étapes portent la même référence et où les étapes 4 et 6 ont disparu. L'étape 7' nouvelle effectue une comparaison entre le nombre $i$ courant d'itérations et le nombre $i_{max}$ d'itérations acceptable tel que déterminé à l'étape 1 ou depuis selon les conditions de ressources disponibles.

On notera que les premier et second modes de réalisation ne s'excluent pas mutuellement ou pourraient être mis en oeuvre conjointement.

On notera encore que la description qui vient d'être faite l'a été en considérant une décomposition de Cholesky d'où résultait une matrice triangulaire supérieure $U$ et que la présente invention s'applique également à une décomposition de Cholesky conduisant à une matrice triangulaire inférieure $L$. Le procédé comporterait alors les mêmes étapes que celui qui vient d'être décrit.

## Revendications

**1.** Procédé de détection conjointe destiné à être mis en oeuvre dans un récepteur d'un système de transmission, tel qu'un système de transmission à accès multiple à répartition de codes, ladite détection consistant en une étape de calcul des signaux qui ont été émis par lesdits émetteurs dudit système mis sous la forme d'un vecteur x et ce, à partir de l'ensemble des signaux reçus des émetteurs dudit système mis sous la forme d'un vecteur $y$, de l'ensemble des caractéristiques dudit système mis sous forme d'une matrice $A$ et éventuellement de l'ensemble des caractéristiques de bruit mis sous forme d'une matrice $n$, ladite étape de calcul consistant en une étape d'inversion d'une matrice $M$ fonction de la matrice système $A$, une étape d'application de l'ensemble des signaux reçus y sur une matrice résultant du produit de la matrice inverse $M^{-1}$ par le transposé conjugué de la matrice $A$, ladite étape d'inversion de la matrice $M$ consistant en sa décomposition de Cholesky en une matrice triangulaire $U$ ou $L$, **caractérisé en ce qu'**il consiste à déterminer ladite matrice triangulaire de manière itérative, chaque itération consistant d'abord au calcul d'un ensemble de blocs appartenant à une ligne de blocs de ladite matrice puis, en fonction de la valeur prise par un critère prédéterminé caractérisant l'évolution du processus de calcul de ladite matrice décomposée comparée à une valeur seuil, soit au passage à l'itération suivante soit à la duplication de la ligne courante sur toutes les autres lignes restantes avec décalage à droite d'un bloc et, éventuellement, tronquage des blocs en excédant, ladite valeur seuil étant déterminée dynamiquement en fonction des ressources disponibles au moment du calcul.

**2.** Procédé selon la revendication 1, **caractérisé en ce que** ledit critère est tel que sa valeur dépend des valeurs respectivement prises par au moins un élément de l'ensemble de blocs de la ligne courante et le ou les éléments correspondants de l'ensemble de blocs de la ligne calculée à l'itération précédente.

**3.** Procédé selon la revendication 2, **caractérisé en ce que** ledit critère est tel que sa valeur est égale à la valeur absolue de la différence des valeurs prises respectivement par l'élément de l'ensemble de blocs de la ligne courante dont la valeur absolue est la plus grande et par l'élément correspondant de l'ensemble de blocs de la ligne précédente.

**4.** Procédé selon la revendication 2, **caractérisé en ce que** ledit critère est tel que sa valeur est égale à la valeur maximale des valeurs absolues des différences entre les valeurs prises respectivement par tous les éléments de l'ensemble de blocs de la ligne courante et par les éléments correspondants de l'ensemble de blocs de la ligne précédente.

**5.** Procédé selon une revendications précédentes, **caractérisé en ce que** ledit critère a pour valeur le nombre d'itérations, la valeur seuil correspondant alors à un nombre maximal d'itérations.

**6.** Récepteur d'un système de transmission, tel qu'un système de transmission à accès multiple à répartition de codes, prévu pour recevoir et détecter les signaux qui ont été émis par des émetteurs dudit système de transmission afin de les recouvrir, **caractérisé en ce que**, pour détecter lesdits signaux, il est prévu pour mettre en oeuvre un procédé de détection selon une des revendications 1 à 5.

**Patentansprüche**

**1.** Verfahren zur gleichzeitigen Erfassung, das dazu bestimmt ist, in einem Empfänger eines Übertragungssystems, wie zum Beispiel eines Übertragungssystems mit Vielfachzugriff zum Verteilen von Codes, angewendet zu werden, wobei das Erfassen aus einem Schritt zum Berechnen der Signale besteht, die von den Sendern des Systems als Vektor x formatiert gesendet wurden, und dies ausgehend von der Einheit von Signalen, die von den Sendern des Systems als Vektor y formatiert empfangen wurden, von der Einheit der Merkmale des Systems als Matrix A formatiert und eventuell der Einheit der Rauschmerkmale als Matrix n formatiert, wobei der Berechnungsschritt aus einem Schritt zum Invertieren einer Matrix M abhängig von der Systemmatrix A und einem Schritt zum Anwenden der Einheit der empfangenen Signale y auf eine Matrix besteht, die sich aus dem Produkt der inversen Matrix $M^{-1}$ multipliziert mit der konjugierten Transponierten der Matrix A ergeben hat, wobei der Schritt zum Invertieren der Matrix M in ihrer Cholesky-Zerlegung in eine Dreiecksmatrix U oder L besteht, **dadurch gekennzeichnet, dass** es darin besteht, die Dreiecksmatrix iterativ zu bestimmen, wobei jede Iteration zuerst in der Berechnung einer Einheit von Blöcken besteht, die zu einer Zeile von Blöcken dieser Matrix gehören, dann in Abhängigkeit von dem Wert, den ein vorbestimmtes Kriterium, das die Entwicklung des Berechnungsprozesses dieser zerlegten Matrix charakterisiert, im Vergleich zu einem Schwellenwert entweder beim Übergang zur nächsten Iteration oder beim Duplizieren der laufenden Zeile auf alle anderen verbliebenen Zeilen mit Verschieben eines Blocks nach rechts annimmt, und eventuell im Abbruch der überschüssigen Blöcke, wobei der Schwellenwert in Abhängigkeit von den im Augenblick der Berechnung verfügbaren Ressourcen dynamisch bestimmt wird.

**2.** Verfahren nach Anspruch 1, **dadurch gekennzeichnet, dass** das Kriterium so beschaffen ist, dass sein Wert von den jeweiligen Werten abhängt, die von mindestens einem Element der Einheit von Blöcken der laufenden Zeile und dem oder den entsprechenden Element(en) der Einheit von Blöcken der Zeile, die bei der vorhergehenden Iteration berechnet wurde, angenommen werden.

**3.** Verfahren nach Anspruch 2, **dadurch gekennzeichnet, dass** das Kriterium so beschaffen ist, dass sein Wert gleich dem Absolutwert des Unterschieds der Werte ist, die jeweils vom Element der Einheit von Blöcken der laufenden Zeile angenommen werden, deren Absolutwert der größte ist, und vom entsprechenden Element der Einheit von Blöcken der vorausgehenden Zeile.

**4.** Verfahren nach Anspruch 2, **dadurch gekennzeichnet, dass** das Kriterium so beschaffen ist, dass sein Wert gleich dem maximalen Wert der Absolutwerte der Unterschiede zwischen den Werten ist, die jeweils von allen Elementen der Einheit von Blöcken der laufenden Zeile und von den entsprechenden Elementen der Einheit von Blöcken der vorhergehenden Zeile angenommen werden.

**5.** Verfahren nach einem der vorausgehenden Ansprüche, **dadurch gekennzeichnet, dass** das Kriterium als Wert die Anzahl der Iterationen hat, wobei der Schwellenwert einer maximalen Anzahl von Iterationen entspricht.

**6.** Empfänger eines Übertragungssystems, wie zum Beispiel eines Übertragungssystems mit Vielfachzugriff zum Verteilen von Codes, der zum Empfangen und Erfassen von Signalen vorgesehen ist, die von Sendern des Übertragungssystems gesendet wurden, um sie zu überlappen, **dadurch gekennzeichnet, dass** zum Erfassen der Signale die Anwendung eines Erfassungsverfahrens nach einem der Ansprüche 1 bis 5 vorgesehen ist.

**Claims**

1.  Joint detection method intended to be implemented in a receiver of a transmission system, such as a Code Division Multiple Access transmission system, the said detection consisting of a step of calculating the signals which were transmitted by the said transmitters of the said system put in the form of a vector $x$, from the set of signals received from the transmitters of the said system put in the form of a vector $y$, the set of characteristics of the said system put in the form of a matrix $A$ and possibly the set of noise characteristics put in the form of a matrix $n$, the said calculation step consisting of a step of inverting a matrix $M$ which is a function of the system matrix $A$, a step of applying the set of received signals y to a matrix resulting from the product of the inverse matrix $M^{-1}$ and the conjugate transpose of the matrix $A$, the said step of inverting the matrix $M$ consisting of its Cholesky decomposition into a triangular *matrix U* or *L,* **characterised in that** it consists of determining the said triangular matrix in an iterative manner, each iteration consisting first of calculating a set of blocks belonging to a row of blocks of the said matrix and then, depending on the value taken by a predetermined criterion **characterising** the evolution of the process of calculating the said decomposed matrix compared with a threshold value, of either passing to the next iteration or duplicating the current row on to all the other remaining rows with shifting to the right by one block and, if applicable, truncation of the excess blocks, the said threshold value being determined dynamically depending on the resources available at the time of the calculation.

2.  Method according to claim 1, **characterised in that** the said criterion is such that its value depends on the values respectively taken by at least one element of the set of blocks of the current row and the corresponding element or elements of the set of blocks of the row calculated at the previous iteration.

3.  , Method according to claim 2, **characterised in that** the said criterion is such that its value is equal to the absolute value of the difference in the values taken respectively by the element of the set of blocks of the current row whose absolute value is the largest and by the corresponding element of the set of blocks of the previous row.

4.  Method according to claim 2, **characterised in that** the said criterion is such that its value is equal to the maximum value of the absolute values of the differences between the values taken respectively by all the elements of the set of blocks of the current row and by the corresponding elements of the set of blocks of the previous row.

5.  Method according to one of the previous claims, **characterised in that** the value of the said criterion is the number of iterations, the threshold value then corresponding to a maximum number of iterations.

6.  Receiver of a transmission system, such as a Code Division Multiple Access transmission system, designed to receive and detect the signals which were transmitted by transmitters of the said transmission system in order to recover them, **characterised in that**, for detecting the said signals, it is designed to implement a detection method according to one of claims 1 to 5.

Fig. 1

Fig. 2

Fig. 3

Fig. 4